# EUROPEAN PATENT APPLICATION

(11) **EP 2 360 620 A1**
(43) Date of publication of application: **24.08.2011**
(21) Application number: 10154504.4
(22) Date of filing: 24.02.2010
(51) Int. Cl.: G06K 9/00

(54) **Eye blink avoidance during image acquisition in a mobile communications device with digital camera functionality**

(71) Applicant: RESEARCH IN MOTION LIMITED, Waterloo, Ontario N2L 3W8 (CA)
(72) Inventor: Shah, Anooj Ramesh, Waterloo, Ontario N2L 3W8 (CA)
(74) Representative: Moore, Barry

(57) **Abstract**

Eye blink avoidance for use in an electronic device (30) having digital camera functionality (56), such as a mobile communications device, smartphone or superphone is described. The device captures multiple images and determines, using eye blink detection (146), whether a subject in an image has closed eyes. This technology allows a mobile phone (100) equipped with a camera to avoid photographs of subjects with their eyes closed by capturing a plurality of images in succession and choosing the image with open eyes by using a best-effort eye blink detection algorithm to detect closed eyes in the faces of the subjects. Depending on user preferences, and configuration, the user may choose one or more of a plurality of images captured (168) that do not have eyes closed or a best image can be selected by the device

## Description

### FIELD OF THE DISCLOSURE

The eye blink avoidance mechanism relates to the field of digital photography, and more particularly related to a system and method for the avoidance of eye blink during digital image acquisition in a mobile communications device having digital camera functionality.

### BACKGROUND

Currently, many electronic devices and especially wireless mobile communication devices include, in addition to microprocessors, memory, etc., digital camera functionality to perform tasks that are primary or secondary for the device. For example, a still camera and a video camera are used primarily for taking stills pictures and/or video clips. Other electronic devices, such as smart phones and computers may have such abilities as an added feature.

It is common for people to use such mobile communication devices, e.g., cellular telephones, to take digital photographs of people and for these digital photographs to be immediately upload to social networking web sites such as Facebook or Flickr for instant distribution and viewing. Often, however, the photographs capture people with their eyes closed as the shutter is pressed and the photograph taken just as one or more people blink their eyes. Thus, the digital photographs capture the subject(s), one or more people, with their eyes closed. Having one or more people in a photograph with their eyes closed makes for unappealing photographs. An instant later, however, their eye are typically open as eye blink is normally very rapid and of relatively short duration.

It is thus desirable to have a mechanism that is capable of avoiding eye blink in a mobile communications device having digital camera functionality. The mechanism should preferably be low cost, easily implementable and not greatly impact operation of the device from the standpoint of the user.

### SUMMARY

There is provided in accordance with the eye blink avoidance mechanism a method of eye blink avoidance for use in a device having digital camera functionality, the method comprising capturing a plurality of images within a predetermined time period, detecting eye blink in each image captured to determine those images having at least one closed eye, and performing one or more actions based on the results of the eye blink detection.

There is also provided in accordance with the eye blink avoidance mechanism a mobile communications device, comprising a digital camera subsystem, a cellular radio subsystem, a memory, a processor coupled to the digital camera subsystem, the cellular radio subsystem and the memory, the processor operative to perform eye blink avoidance, including capturing a plurality of images within a predetermined time period, detecting eye blink in each image captured to determine those images having at least one closed eye, and performing one or more actions based on the results of the eye blink detection.

### BRIEF DESCRIPTION OF THE DRAWINGS

The mechanism is herein described, by way of example only, with reference to the accompanying drawings, wherein:

Fig. 1 is a is a front view of an example standalone digital camera incorporating the eye blink avoidance mechanism;

Fig. 2 is a is a rear view of an example standalone digital camera of Figure 2;

Fig. 3 is a front view of an example mobile electronic device incorporating digital camera functionality and the eye blink avoidance mechanism;

Fig. 4 is a rear view of the example mobile electronic device illustrated in Figure 3;

Fig. 5 is a block diagram illustrating an example wireless communication device incorporating the eye blink avoidance mechanism;

Fig. 6 is a simplified block diagram illustrating an example host device in which digital camera functionality is integrated;

Fig. 7 is a simplified block diagram illustrating an example system-on-chip image sensor;

Fig. 8 is a simplified block diagram illustrating an example digital camera module;

Fig. 9 is a simplified block diagram illustrating an example display module;

Fig. 10 is a flow diagram illustrating a first example eye blink avoidance method;

Fig. 11 is a flow diagram illustrating example possible actions based on closed eye detection results;

Fig. 12 is a flow diagram illustrating a second example eye blink avoidance method; and

Fig. 13 is a process flow diagram illustrating the closed eye detection algorithm in more detail.

### DETAILED DESCRIPTION

### Notation Used Throughout

The following notation is used throughout this document:

| Term | Definition |
|---|---|
| ADC | Analog to Digital Converter |
| AE | Automatic Exposure |
| ASIC | Application Specific Integrated Circuit |
| AWB | Automatic White Balance |
| CCD | Charge Coupled Device |
| CDROM | Compact Disc Read Only Memory |
| CPU | Central Processing Unit |
| CSTN | Color Super-Twisted Nematic |
| DAC | Digital to Analog Converter |
| DMA | Direct Memory Access |
| DSLR | Digital Single Lens Reflex |
| DSP | Digital Signal Processor |
| DSTN | Double layer Super-Twisted Nematic |
| EDGE | Enhanced Data rates for GSM Evolution |
| EEROM | Electrically Erasable Read Only Memory |
| EPROM | Erasable Programmable Read-Only Memory |
| FM | Frequency Modulation |
| FPGA | Field Programmable Gate Array |
| FRSTN | Fast Response Super-Twisted Nematic |
| FSTN | Film compensated Super-Twisted Nematic |
| FTP | File Transfer Protocol |
| GPRS | General Packet Radio Service |
| GPS | Global Positioning System |
| GSM | Global System for Mobile communications |
| HDL | Hardware Description Language |
| HTTP | Hyper-Text Transport Protocol |
| LAN | Local Area Network |
| LCD | Liquid Crystal Display |
| LTE | Long Term Evolution |
| MAC | Media Access Control |
| MSTN | Monochrome Super-Twisted Nematic |
| OLED | Organic Light Emitting Diode |
| PC | Personal Computer |
| PCI | Peripheral Component Interconnect |
| PDA | Personal Digital Assistant |
| PNA | Personal Navigation Assistant |
| RAM | Random Access Memory |
| RAT | Radio Access Technology |
| RF | Radio Frequency |
| ROM | Read Only Memory |
| RUIM | Re-Usable Identification Module |
| SDIO | Secure Digital Input/Output |
| SIM | Subscriber Identity Module |
| SPI | Serial peripheral interconnect |
| SSID | Service Set Identifier |
| STN | Super-Twisted Nematic |
| SVGA | Super Video Graphics Array |
| TCP | Transport Control Protocol |
| TFT | Thin Film Transistor |
| TN | Twisted Nematic |
| USB | Universal Serial Bus |
| UWB | Ultra-Wideband |
| UXGA | Ultra eXtended Graphics Array |
| WAN | Wide Area Network |
| WLAN | Wireless Local Area Network |

### Detailed Description

Note that some aspects of the mechanism described herein may be constructed as software objects that are executed in embedded devices as firmware, software objects that are executed as part of a software application on either an embedded or non-embedded computer system such as a digital signal processor (DSP), microcomputer, minicomputer, microprocessor, etc. running a real-time operating system such as WinCE, Symbian, OSE, Embedded LINUX, etc. or non-real time operating system such as Windows, UNIX, LINUX, etc., or as soft core realized HDL circuits implemented in an Application Specific Integrated Circuit (ASIC) or Field Programmable Gate Array (FPGA), or as functionally equivalent discrete hardware components.

As will be appreciated by one skilled in the art, the eye blink avoidance mechanism may be implemented as a system, method, computer program product or any combination thereof. Accordingly, the eye blink avoidance mechanism may take the form of an entirely hardware implementation, an entirely software implementation (including firmware, resident software, micro-code, etc.) or an implementation combining software and hardware aspects that may all generally be referred to herein as a "circuit," "module" or "system." Furthermore, the eye blink avoidance mechanism may take the form of a computer program product implemented in any tangible medium of expression having computer usable program code implemented in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CDROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code implemented therewith, either in baseband or as part of a carrier wave. The computer usable program code may be transmitted using any appropriate medium, including but not limited to wireless, wireline, optical fiber cable, RF, etc.

Computer program code for carrying out operations of the eye blink avoidance mechanism may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The eye blink avoidance mechanism is described below with reference to flowchart illustrations and/or block diagrams of methods, apparatus (systems) and computer program products according to implementations thereof. It will be understood that each block of the flowchart illustrations and/or block diagrams, and combinations of blocks in the flowchart illustrations and/or block diagrams, can be implemented or supported by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

It is noted that computer programs implementing the eye blink avoidance mechanism can be distributed to users on a distribution medium such as floppy disk or CDROM or may be downloaded over a network such as the Internet using FTP, HTTP, or other suitable protocols. From there, they will often be copied to a hard disk or a similar intermediate storage medium. When the programs are to be run, they will be loaded either from their distribution medium or their intermediate storage medium into the execution memory of the computer, configuring the computer to act in accordance with the method of this mechanism. All these operations are well-known to those skilled in the art of computer systems.

The flowchart and block diagrams in the Figures illustrate the architecture, functionality, and operation of possible implementations of systems, methods and computer program products according to various implementations of the eye blink avoidance mechanism. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or by combinations of special purpose hardware and computer instructions.

The term "pixel," short for "picture element," is used herein with different meanings, depending on the context: an image sensor, a display module, or a digital representation of an image. In the context of a digital representation of an image, a pixel is the smallest element of the digital representation of the image.

A digital camera module includes one or more lenses that are focusing light onto a photosensitive pixel array of the image sensor. The lenses and the pixel array form the optical setup of the camera module, and this optical setup maybe adjustable by, for example, adjusting distances between a lens and the image sensor or among lenses, or by replacing one set of lenses with another. The optical setup at a particular moment defines the optical field of view of the camera module at that moment. The term "optical field of view" is defined as the part of the world that is visible to the pixel array of the image sensor via the optical setup.

The pixel array of an image sensor is an array of very fine electronic pixels arranged in horizontal rows and vertical columns. Such an image sensor, for example, a charge coupled device (CCD) or complementary metal oxide semiconductor (CMOS) image sensor, is capable of receiving and capturing radiant energy, and converting the radiant energy into electronic signals that become a virtual representation of an optical image. When digital camera functionality is described as a two-megapixel, three-megapixel or five-megapixel, this is an approximate description of the number of pixels in the image sensor's pixel array. The term "captured image" refers to the image read from the pixel array, discounting any margin or border pixels. For example, a two-megapixel digital camera may produce a captured image of 1600 by 1200 pixels.

A host device in which digital camera functionality is integrated typically includes a display module to display a "preview image" that is derived from the captured image. Looking at the preview image may assist a user of the host device in taking a photograph using the digital camera functionality, since the preview image provides the user with visual feedback as to what the digital camera "sees". The display module includes a pixel array, which is an array of pixels arranged in horizontal rows and vertical columns. Depending on the technology for the pixel array, the pixels may comprise photo-emitting material, or may by controllable, as in liquid crystal display (LCD) technology, to block light or permit the transmission of light in varying degrees. Other technologies for pixel arrays in display modules are known in the art. The number of pixels in a pixel array of the display module is typically smaller than the number of pixels in the captured image. For example, a display may have 320 by 240 pixels.

As known in the art, the term "color temperature" is a characteristic of visible light. The color temperature of a light source is determined by comparing its chromaticity with that of an ideal black-body radiator. The temperature at which the heated black-body radiator matches the color of the light source is that source's color temperature. A low color temperature shifts light toward the red and a high color temperature shifts light toward the blue. Different light sources emit light at different color temperatures. For that reason, pictures may turn out with a yellow/orange cast in incandescent (tungsten) lighting and bluish in fluorescent lighting. Physical filters can be used to correct for incandescent or fluorescent lighting. In digital photography, if a camera "knows" which object is white and supposed to come out white in the picture, the camera can calculate the difference between the current color temperature of that object and the correct color temperature of a white object and then shift the colors in the image by that difference. AWB may be done in many different ways.
In one example, an algorithm in the camera searches the image for the lightest area and assumes this is white. This area is then used to color balance the entire image.

Exposure is the total amount of light allowed to fall on an image sensor during the process of taking a photograph. "Correct" exposure may be defined in some instances as an exposure that achieves the effect the photographer intended. The purpose of exposure adjustment (in combination with lighting adjustment) is to control the amount of light from the subject that is allowed to fall on the image sensor, so to yield a "correct" or acceptable exposure. A photograph may be described as overexposed when it has a loss of highlight detail, that is, when the bright parts of an image are effectively all white, known as "blown out highlights" (or "clipped whites"). A photograph may be described as underexposed when it has a loss of shadow detail, that is, the dark areas indistinguishable from black, known as "blocked up shadows" (or sometimes "crushed shadows, "crushed blacks," or "clipped blacks,"). A camera in "automatic exposure" (AE) mode may automatically calculate and adjust exposure settings in order to match (as closely as possible) the subject's mid-tone to the mid-tone of the photograph.

"Autofocus" is a feature of an optical system that allows it to obtain and sometimes continuously maintain focus on a subject. Sensors are used to collect data and the data is used to control electromechanical system that adjusts the focus of the optical system. With Passive Auto Focus, analysis is performed on the image captured by the image sensor and/or other sensors to achieve phase detection or contrast measurement. With Active Auto Focus, distance to the subject may be measured independently of the optical system, for example, using ultrasonic sound waves, Laser light and/or infrared light. Transmitters and receivers needed for active auto focusing may optionally be embedded within the optical system.

The definition of "face detection" and "face localization" tasks may have many variations on a general theme. As a non limiting example, the goal of face detection may be defined as to determine whether or not there are any faces in an arbitrary image and, if present, return the image location and extent of each face. Face detection can be regarded as a specific case of object-class detection. Face detection can be regarded as a more general case of face localization, in which the number of faces in the images is known.

The definition of "eye blink detection" includes, for example, any process, technique, algorithm whose main goal is to determine whether or not any subjects (one or more people) in a digital photograph have at least one eye closed.

### Digital Camera Devices

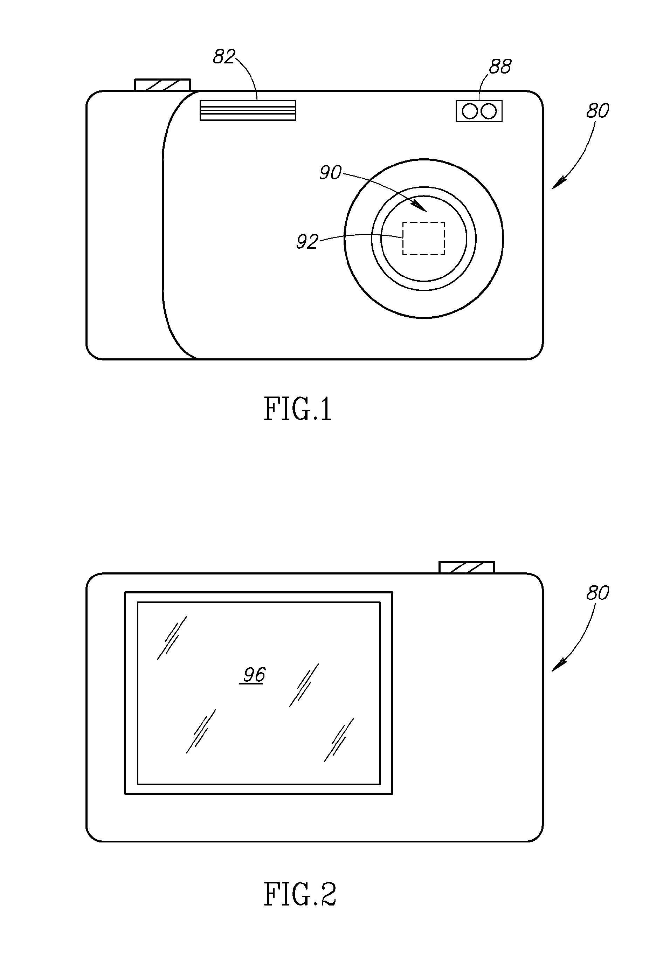

A front view of an example standalone digital camera, generally referenced 80, incorporating the eye blink avoidance mechanism is shown in Figure 1. A rear view of the standalone digital camera 80 is shown in Figure 2. Examples for standalone digital camera 80 includes, but is not limited to, a still camera, a Digital Single Lens Reflex (DSLR) camera, a video camera, a camcorder and the like. The camera 80 comprises a flash 82, lens 90, image sensor 92 and one or more additional sensors 88. The lenses 90 and 94 may include one or more optical elements. Image sensor 92 is located inside standalone digital camera behind lens 90. Optical elements of lens 90 may optionally be movable by a mechanical control element (not shown), for example, for the purpose of implementing autofocus functionality. Camera 80 optionally comprises flash 82 and one or more sensors 88.

The camera also comprises a display module 96. When camera 80 is operated, light focused by the lens 90 onto image sensor 92 results in the capture of an image by image sensor 92, and a preview image derived from the captured image is displayed by display module 96.

As described in more detail infra, the eye blink avoidance mechanism can be implemented in camera 80 to help the user generate digital photographs that do not have subjects in them with closed eyes.

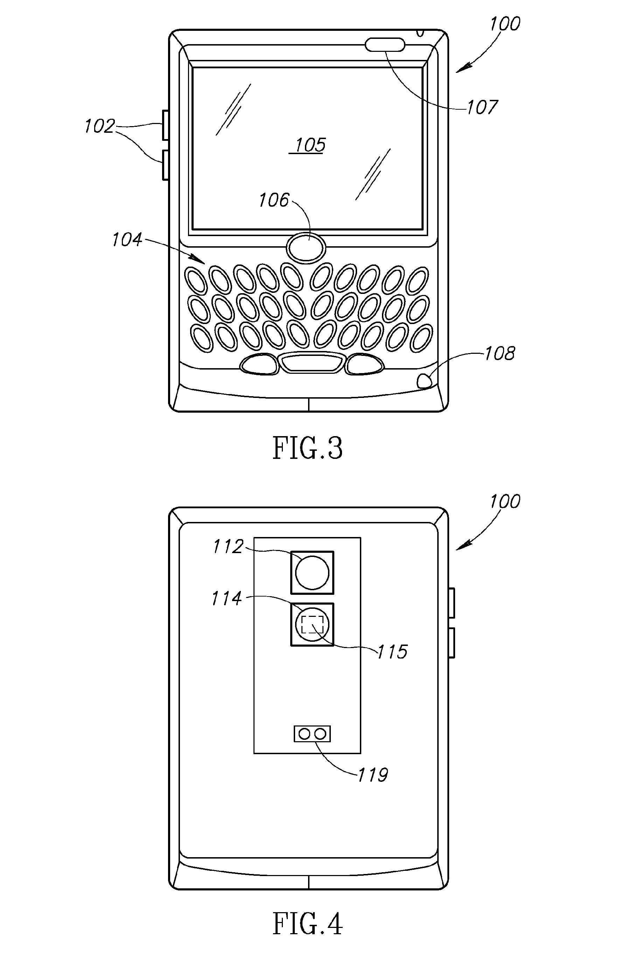

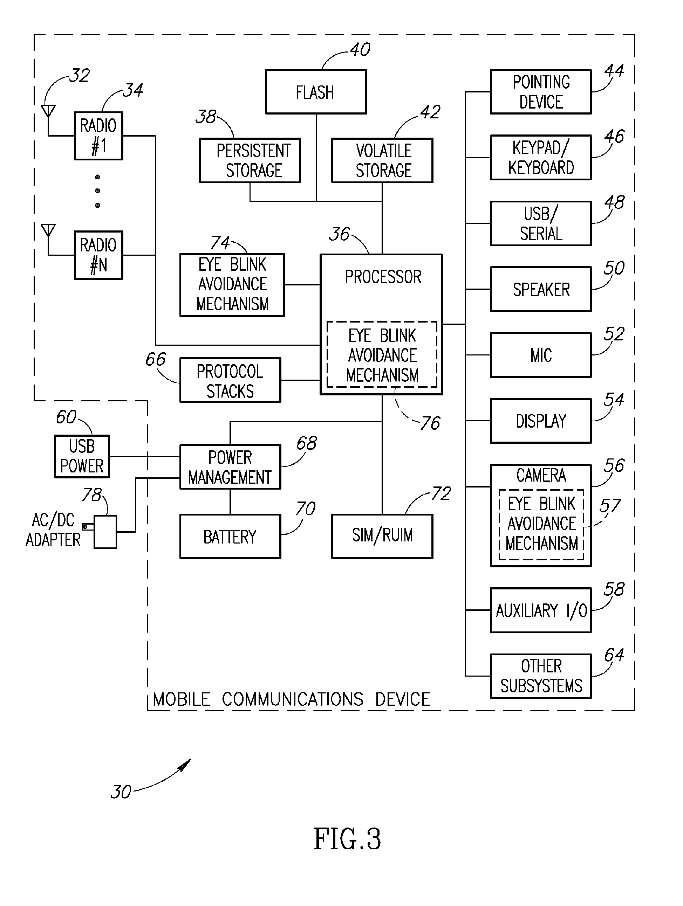

A front view of an example mobile electronic device incorporating digital camera functionality and the eye blink avoidance mechanism is shown in Figure 3. The example electronic device is generally referenced 100. A non-exhaustive list of examples for the electronic device includes a personal digital assistant (PDA), a mobile phone, a smartphone, a handheld gaming device, a handheld media player, an electronic mail client, an instant messaging client, a netbook computer, a notebook computer, a laptop computer, a desktop computer and the like.

Electronic device 100 may be one device enclosed in one enclosure. Electronic device 100, however, may represent a "system", in which different components are connected together to form the system. As an example, a desktop computer may be such a system, having a flat panel display provided by one vendor and a camera provided by another vendor.

The device 100 comprises a display module 105 and various user input components including, for example, a keyboard 104, a trackball 106, buttons 102 and a microphone 108. If display module 105 comprises a touchscreen then display module 105 is also a user input component. Other user input components are also contemplated. Various user output components of mobile electronic device 100 are shown, including, for example, a speaker 107. Other user output components are also contemplated.

A rear view of the example mobile electronic device illustrated in Figure 3 is shown in Figure 4. A flash 112, lens 114, image sensor 115 and one or more other sensors 119. Lens 114 may include one or more optical elements. Image sensor 115 is located inside the camera 100 behind lens 114. Optical elements of lens 114 may optionally be movable by a mechanical control element (not shown) of device 100, for example, for the purpose of implementing autofocus functionality. When the digital camera functionality is operated, light focused by lens 114 onto image sensor 115 results in the capture of an image by image sensor 114, and a preview image related to the captured image is displayed by display module 105. Mobile electronic device 100 may optionally include one or more sensors 119.

Optical zoom capabilities may be available with standalone digital camera 80 or mobile electronic device 100 if a focal length of the arrangement of optical elements of lenses 90 and 114, respectively, can be changed, usually through mechanical means. Digital zoom capabilities are implemented electronically and may be available without the need for a change in the focal length of the arrangement of optical elements.

Digital zoom capabilities may be available with standalone digital camera 80 or mobile electronic device 100. Digital zoom is accomplished by cropping an image to retain a center part of the image with the same aspect ratio as the original and to discard the rest of the image. The retained portion is referred to herein as the cropped image, including cases where the entire image is retained. At a digital zoom level of 1x, no cropping is performed and the entire image is retained. The cropped image is therefore identical to the image before cropping. At a digital zoom level of 2X, about one quarter of the image is retained. At a digital zoom level of 3x, about one ninth of the image is retained.

### Mobile Communications Device Implementation

A block diagram illustrating an example mobile communication device incorporating the eye blink avoidance mechanism is shown in Figure 5. The mobile communication device is preferably a two-way communication device having voice and data communication capabilities. In addition, the device optionally has the capability to communicate with other computer systems via the Internet. Note that the mobile communications device (or mobile device) may comprise any suitable wired or wireless device such as multimedia player, mobile communication device, cellular phone, smartphone, PDA, PNA, Bluetooth device, etc. For illustration purposes only, the device is shown as a mobile device, such as a cellular based smartphone or superphone. Note that this example is not intended to limit the scope of the mechanism as the eye blink avoidance mechanism can be implemented in a wide variety of communication devices. It is further appreciated the mobile device 30 shown is intentionally simplified to illustrate only certain components, as the mobile device may comprise other components and subsystems 64 beyond those shown.

The mobile device, generally referenced 30, comprises a processor 36 which may comprise a baseband processor, CPU, microprocessor, DSP, etc., optionally having both analog and digital portions. The mobile device may comprise a plurality of radios 34 and associated antennas 32. Radios for the basic cellular link and any number of other wireless standards and Radio Access Technologies (RATs) may be included. Examples include, but are not limited to, Global System for Mobile Communication (GSM)/GPRS/EDGE 3G; WCDMA; LTE, WiMAX for providing WiMAX wireless connectivity when within the range of a WiMAX wireless network; Bluetooth for providing Bluetooth wireless connectivity when within the range of a Bluetooth wireless network; WLAN for providing wireless connectivity when in a hot spot or within the range of an ad hoc, infrastructure or mesh based wireless LAN (WLAN) network; near field communications; UWB; GPS receiver for receiving GPS radio signals transmitted from one or more orbiting GPS satellites, FM transceiver provides the user the ability to listen to FM broadcasts as well as the ability to transmit audio over an unused FM station at low power, such as for playback over a car or home stereo system having an FM receiver, digital broadcast television, etc. The mobile device also comprises protocol stacks 66, which may or may not be entirely or partially implemented in the processor 36. The protocol stacks implemented will depend on the particular wireless protocols required.

The mobile device may also comprise internal volatile storage 42 (e.g., RAM) and persistence storage 38 (e.g., ROM) and flash memory 40. Persistent storage 38 also stores applications executable by processor 36 including the related data files used by those applications to allow device 30 to perform its intended functions. Several user-interface devices include trackball/thumbwheel 44 which may comprise a depressible thumbwheel/trackball that is used for navigation, selection of menu choices and confirmation of action, keypad/keyboard 46 such as arranged in QWERTY fashion for entering alphanumeric data and a numeric keypad for entering dialing digits and for other controls and inputs (the keyboard may also contain symbol, function and command keys such as a phone send/end key, a menu key and an escape key), microphone(s) 52, speaker(s) 50 and associated audio codec or other multimedia codecs, vibrator (not shown) for alerting a user, camera and related circuitry 56, display(s) 54 and associated display controller. A serial/USB or other interface connection 48 (e.g., SPI, SDIO, PCI, USD, etc.) provides a serial link to a user's PC or other device. SIM/RUIM card 72 provides the interface to a user's SIM or RUIM card for storing user data such as address book entries, user identification, etc.

Portable power is provided by the battery 70 coupled to power management circuitry 68. External power is provided via USB power 60 or an AC/DC adapter 78 connected to the power management circuitry 68 which is operative to manage the charging and discharging of the battery 70.

The mobile communications device is also adapted to implement the eye blink avoidance mechanism 74. Alternatively (or in addition to), the eye blink avoidance mechanism may be implemented as (1) a task 74 stored in external memory executed by the processor 36, (2) as a task 76 executed from memory embedded in processor 36, or (3) hardware/software 57 within camera subsystem block 56. The eye blink avoidance task blocks 74, 76, 57 are adapted to implement the eye blink avoidance mechanism as described in more detail infra. Note that the eye blink avoidance mechanism may be implemented as hardware, software or as a combination of hardware and software. Implemented as a software task, the program code operative to implement the eye blink avoidance mechanism is stored in one or more memories 38, 40, 42 or local memories within the processor 36.

### Host Device

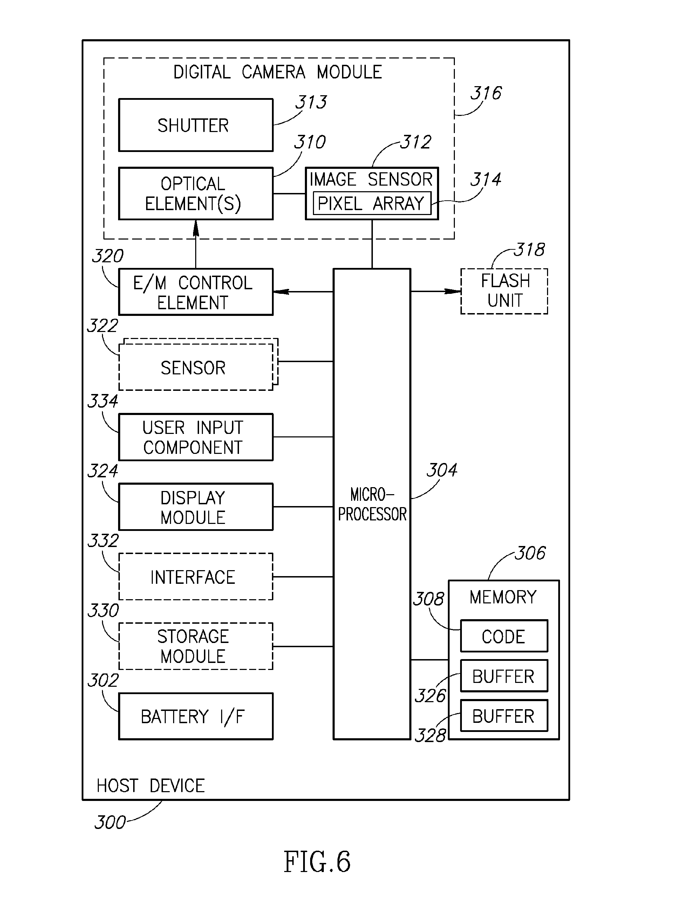

A simplified block diagram illustrating an example host device in which digital camera functionality is integrated is shown in Figure 6. Standalone digital camera 80 and mobile electronic device 100 are both examples of a host device such as illustrated in Figure 6, and other host devices are also contemplated. Host device 300 may comprise components, elements, circuitry and/or modules that, for clarity, are not illustrated in Figure 6. Host device 300 may be battery-operated and comprises a battery interface 302 through which a battery (not shown) can power components of host device 300.

Host device 300 comprises a processor 304 and a memory 306, coupled to processor 304. Memory 306 may comprise removable memory or non-removable memory or any combination thereof. Memory 306 may comprise volatile memory or non-volatile memory or any combination thereof. Memory 306 is an example of physical computer-readable media.

Memory 306 is arranged to store code 308 that is executable by processor 304. Code 308 may comprise firmware or software or any combination thereof. Code 308 may include an operating system for host device 300 and applications to be run on host device 300. Code 308, when executed by processor 304, may cause host device 300 to perform any of the methods described herein. It should be understood that processor 304 is representative of any actual number of processors in host device 300.

Host device 300 comprises an arrangement 310 of one or more optical elements, and an image sensor 312 optically coupled to arrangement 310. Image sensor 312 comprises a pixel array 314 comprising photosensitive material. Image sensor 312 is arranged to read a captured image from pixel array 314. The actual size of the image read from pixel array 314 will depend on the number of pixels in pixel array 314 and the sensor mode in which image sensor 312 is operated. Ultra extended Graphics Array (UXGA) and Super Video Graphics Array (SVGA) are two examples for a sensor mode. As mentioned above, the term captured image refers to the image read from the pixel array, discounting any margin or border pixels. For example, an image sensor comprising a pixel array of dimensions 1624 by 1216 and operated in a UXGA mode may read an image of 1608 by 1208 pixels. With a margin of four dummy columns along each edge of the image, the dimensions of the captured image are therefore 1600 by 1200 pixels.

Image sensor 312 and arrangement 310 and optionally a shutter 313 may be packaged together as a digital camera module 316. A non-exhaustive list of examples for image sensor 312 includes a charge coupled device (CCD) image sensor and a complementary metal oxide semiconductor (CMOS) image sensor. Image sensor 312 may include processing capabilities. For example, image sensor 312 may be a system-on-chip (SOC) image sensor. Alternately, image sensor 312 may lack processing capabilities.

Host device 304 may optionally include a flash unit 318, representative of flash 106 and flash 216. Flash unit 318 may be controllable by processor 304 to discharge a flash of light in synchronization with capturing an image using image sensor 312. The amount of light to be discharged by flash unit 318 may be controllable by processor 304.

Host device 304 may optionally include an electromechanical element 320, such as a motor or an actuator, mechanically coupled to optical elements of arrangement 310. Electromechanical element 320 may be controllable by processor 304 to adjust positions of optical elements of arrangement 310 and to effect focusing and optionally other characteristics of arrangement 310.

Host device 304 may optionally include one or more sensors 322 to be used in conjunction of capturing images by host device 300. Any of sensors 322 may be, for example, an optical autofocus sensor, an exposure meter, a pair of an ultrasonic transmitter and an ultrasonic receiver, a pair of an infrared transmitter and an infrared receiver, a pair of a laser transmitter and an optical receiver, and any other sensor as known in the art. Sensors 322 may be able to provide measurements indicative of distance to objects, ambient light conditions and any other parameters useful in conjunction to capturing images at host device 300. Any of sensors 322 may be located inside or outside of digital camera module 316 and even behind optical elements of arrangement 310. Pixel array 314 may optionally function as one of sensors 322 to provide measurement useful for adjusting focus, exposure, white balancing and so on.

Host device 304 includes a display module 324 coupled to processor 304. A non-exhaustive list of examples for an element comprised in display module 324 includes an active matrix, a passive matrix, a thin film transistor (TFT) liquid crystal display (LCD), a thin film diode (TFD) LCD, an organic light emitting diode (OLED), a capacitive touchscreen, a resistive touchscreen, a twisted nematic (TN) display, a super-twisted nematic (STN) display, and the following types of STN displays: color STN (CSTN), double layer STN (DSTN), dual scan STN (DSTN), fast response STN (FRSTN), film compensated STN (FSTN), double film STN (FFSTN), and monochrome STN (MSTN).

Although display module 324 is illustrated in Figure 6 as comprised in host device 300, in other implementations, display module 324 may be external to host device 300 and host device 300 may comprise an interface (not shown) through which display module 324 can receive input from host device 300.

Memory 306 may comprise a buffer 326 and a buffer 328. Buffer 326 is arranged to store a recordable image that is to be recorded in a storage medium. Buffer 328 is arranged to store a preview image to be displayed by display module 324. Both the recordable image and the preview image are derived from the captured image.

The storage medium to which a recordable image stored in buffer 326 is to be recorded may be comprised in host device 300, illustrated in Figure 6 as an optional block 330. Alternatively or additionally, the storage medium to which a recordable image stored in buffer 326 is to be recorded may be external to host device 300. Recording of the image in the external storage medium (not shown) may be enabled using an interface of host device 300, illustrated in Figure 6 as an optional block 332. A non-exhaustive list of examples for interface 332 includes a radio-frequency wireless communication interface, a wired communication interface, a universal serial bus (USB) connector, and an optical interface.

Host device 300 comprises one or more user input components 334 coupled to processor 304. A non-exhaustive list of examples for user input components 334 includes a trackball, a thumbwheel, a key, a button, a keyboard, a touchscreen, an optical user input component, and an audio user input component such as a microphone. Host device 300 may be able to operate pixel array 314 as a user input component and therefore pixel array 306 may be considered as one of user input components 334.

### Image Sensor

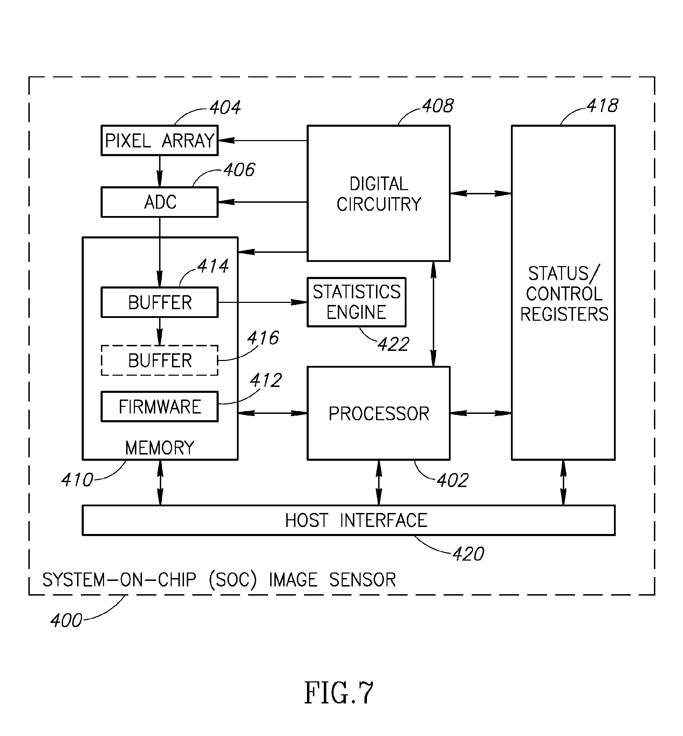

A simplified block diagram illustrating an example system-on-chip image sensor is shown in Figure 7. Image sensor 400, which is an example of image sensor 312, may comprise components, elements, circuitry and/or modules that, for clarity, are not illustrated in Figure 7. Image sensor 400, being a system-on-chip image sensor, is a single integrated circuit and necessarily comprises a processor 402. Image sensor 400 comprises a pixel array 404 comprising photosensitive material. Image sensor 400 is arranged to read a captured image from pixel array 404.

Image sensor 400 comprises an analog-to-digital converter (ADC) 406 to convert analog output of pixel array 404 to digital output. Image sensor 400 comprises digital circuitry 408 coupled to pixel array 404 and to processor 402. Digital circuitry 408 comprises digital control circuitry that directly controls the operation of pixel array 404, since digital circuitry 408 may be able to operate faster than processor 402.

Image sensor 400 comprises a memory 410 coupled to processor 402. Firmware 412 of processor 402 may be stored in memory 410. Memory 410 comprises a buffer 414 in which the digital output of ADC 406 is stored.

As described herein, some implementations of image sensor 400 may be able to output two different images, for example, a cropped image and a preview image. For at least this reason, image sensor 400 may comprise another buffer, illustrated in Figure 7 as optional block 416. All or part of the contents of buffer 414 may be copied to buffer 416 so that image sensor 400 is able to process the contents of buffer 416 independently of the contents of buffer 414.

The contents of buffer 414 and optional buffer 416 may be operated on by firmware 412 when executed by processor 402, or by one or more portions of digital circuitry 408, or by both. Digital circuitry 408 may have non-control functionality implemented therein. A non-exhaustive list of such non-control functionality includes cropping, zooming, derating, panning, conversion of color format and any combination thereof. At least one of firmware 412 when executed by processor 402 and digital circuitry 408 operates on buffer 416.

Image sensor 400 comprises one or more status/control registers 418 to affect operation of digital circuitry 408 and processor 402. For example, any programmable or configurable parameters of image sensor 400, such as sensor mode, output dimensions, preview image sharpness, and whether image sensor 400 generates the preview image, may be stored in status/control registers 418.

Image sensor 400 comprises a host interface 420 coupled to memory 410 to output contents of buffer 414 and optional buffer 416 using Direct Memory Access (DMA), and coupled to the one or more status/control registers 418 to enable reading and writing to the one or more status/control registers 418. Host interface 420 may optionally be coupled to processor 402.

Image sensor 400 comprises a statistics engine 422 to gather real-time statistical information about images stored in buffer 414. The statistical information is available to processor 420 that may use it to perform real-time image control tasks.

In one example, processor 402 may use the statistical information in calculating exposure setting for a scene so that image sensor 400 would output a correctly exposed image. The setting may include a combination of exposure control analog gain for pixel array 404 and/or ADC 406 and digital gain.

In another example, processor 402 may use the statistical information in calculating gain adjustments to individual colors in an image in order to achieve a desired white balancing.

### Digital Camera and Display Modules

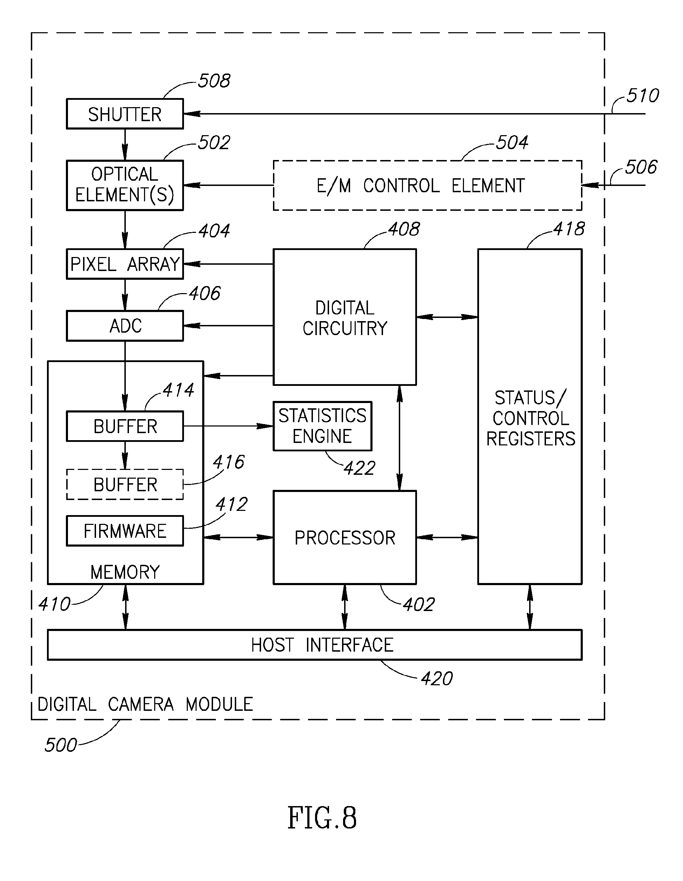

A simplified block diagram illustrating an example digital camera module is shown in Figure 8. Digital camera module 500, which is an example of digital camera module 316, may comprise components, elements, circuitry and/or modules that, for clarity, are not illustrated in Figure 8. Digital camera module 500 comprises an arrangement 502 of one or more optical elements. A non-exhaustive list of examples for an optical element in arrangement 310 of Figure 6 or arrangement 502 in Figure 8 includes lens, collimator, filter, and polarizer.

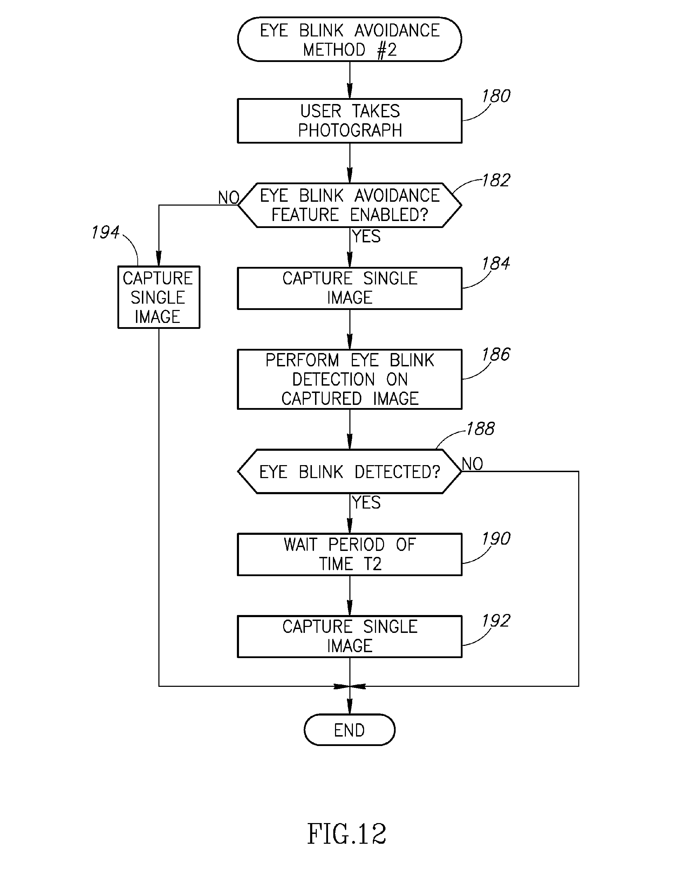

Digital camera module 500 comprises processor 402, pixel array 404, ADC 406, digital circuitry 408, memory 414, status/control registers 418, host interface 420 and statistics engine 422 all of which have been described with respect to Figure 12. Memory 410 comprises buffer 414 and may optionally comprise buffer 416. Firmware 412 may be stored in memory 410. Digital camera module 500 may be enclosed in a housing (not shown) such that arrangement 502 of one or more optical elements is exposed or exposable, for example, by opening a shutter (not shown), to radiant energy, and such that host interface 420 is accessible.

Digital camera module 500 may optionally include an electromechanical control element 504, such as electromechanical control element 320 of Figure 6, controllable to mechanically move optical elements of arrangement 502. In this case, arrow 506 represents control signals from outside of digital camera module 500 to control operation of electromechanical control element 504. In an alternative option, digital camera module 500 does not include an electromechanical control element and arrow 506 represents a mechanical interface to an electromechanical control element. It should be noted that optical elements of digital camera module 500 may not be movable at all.

Digital camera module 500 may optionally include a shutter 508 to control exposure of pixel array 404, and a mechanical or electrical control interface 510 to shutter 508.

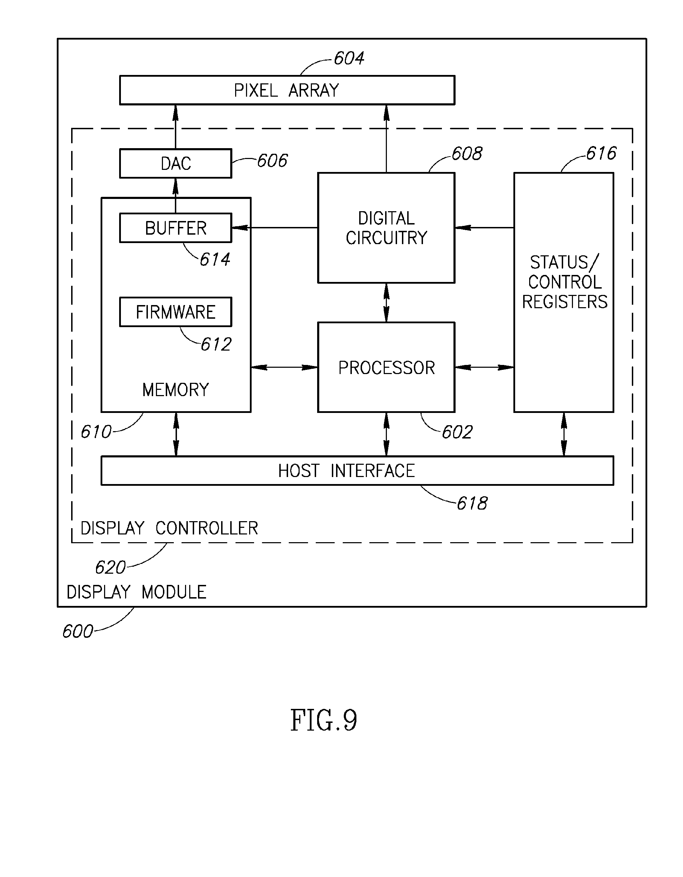

A simplified block diagram illustrating an example display module is shown in Figure 9. Display module 600, which is an example of display module 324, may comprise components, elements, circuitry and/or modules that, for clarity, are not illustrated in Figure 9. Display module 600 comprises a processor 602. Display module 600 comprises a pixel array 604. Depending on the technology for pixel array 604, the pixels may comprise photo-emitting material, or may by controllable, as in LCD technology, to block light or permit the transmission of light in varying degrees. Other technologies for pixel arrays in display modules are known in the art.

Display module 600 comprises a digital-to-analog converter (DAC) 606 to convert digital representations of images to analog input for pixel array 604. Display module 600 comprises digital circuitry 608 coupled to pixel array 604 and to processor 602. Digital circuitry 608 directly controls the operation of pixel array 604, since digital circuitry 608 may be able to operate faster than processor 602.

Display module 600 comprises a memory 610 coupled to processor 602. Firmware 612 of processor 602 may be stored in memory 610. Memory 610 comprises a buffer 614 in which the digital input to DAC 606 is stored.

The contents of buffer 614 may be operated on by firmware 612 when executed by processor 602, or by one or more portions of digital circuitry 608, or by both.

Display module 600 comprises one or more status/control registers 616 to affect operation of digital circuitry 608 and processor 602. For example, whether display module 600 is being operated in full-screen mode or in a smaller screen mode, may be stored in status/control registers 618.

Display module 600 comprises a host interface 618 coupled to memory 610 for input of the contents of buffer 614 using DMA, and coupled to status/ control registers 616 to enable reading and writing to the one or more of status/control registers 616. Host interface 618 may optionally be coupled to processor 602.

In one example, elements illustrated in Figure 9 other than pixel array 604 may be packaged as a single component, known as a display controller 620. Display module 614 may then comprise pixel array 604 and display controller 620.

### Eye Blink Avoidance Mechanism

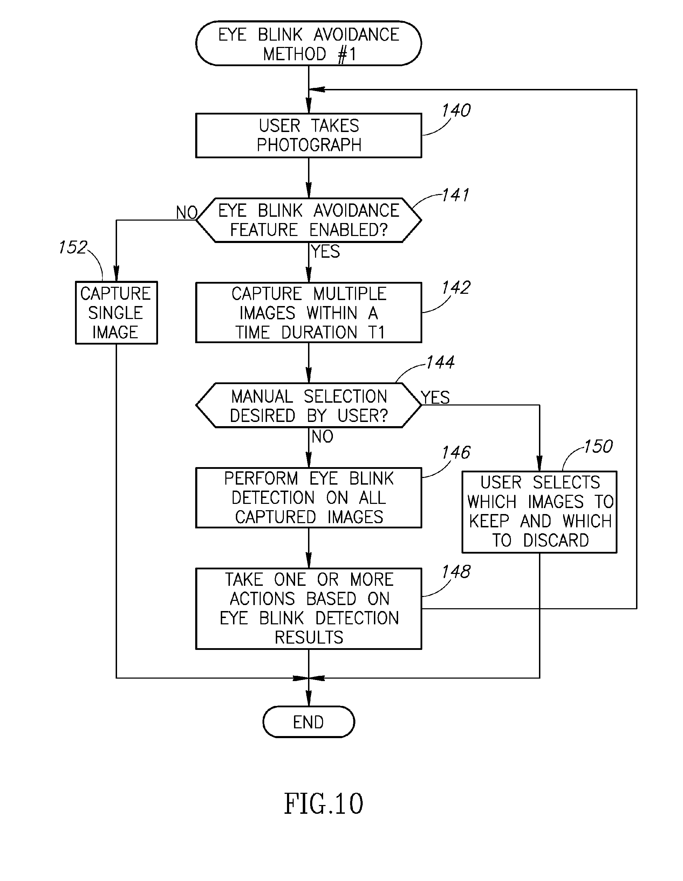

A flow diagram illustrating a first example eye blink avoidance method is shown in Figure 10. The mechanism is normally enabled when the device is set to camera mode of operation and the user has enabled the eye blink avoidance feature of the device. The user is given the option of turning the eye blink avoidance feature on or off. First, the user initiates taking the photograph, i.e. snaps the shutter (step 140). It is checked whether the user has enabled the eye blink avoidance feature of the device (step 141). If the feature is not enabled, the device captures a single digital image and normal image processing is performed (step 152) and the method ends thereafter.

If the eye blink avoidance feature, however, is enabled (step 141), the device captures a plurality of images n within a certain time duration *t1.* The number of images captured may be fixed by the device or configurable by the user. Typical values for n, for example, may be 2, 3 or 4. The time period *t1* in this the *n* images are captured may be either fixed in the device or configurable by the user. The value for *t1 ,* for example, is on the order of 1 or 2 seconds.

It is then checked whether the user has configured the device for manual selection of the captured images (step 144). If the device is configured for manual selection by the user, the device then gives the user the ability to select which image(s) to retain and which to discard (step 150).

If the device is not configured for manual selection by the user (step 144), the device then performs eye blink detection on all captured images (step 146). Based on the results of the eye blink detection process, the device then takes one or more actions (step 148). Example possible actions are described hereinbelow.

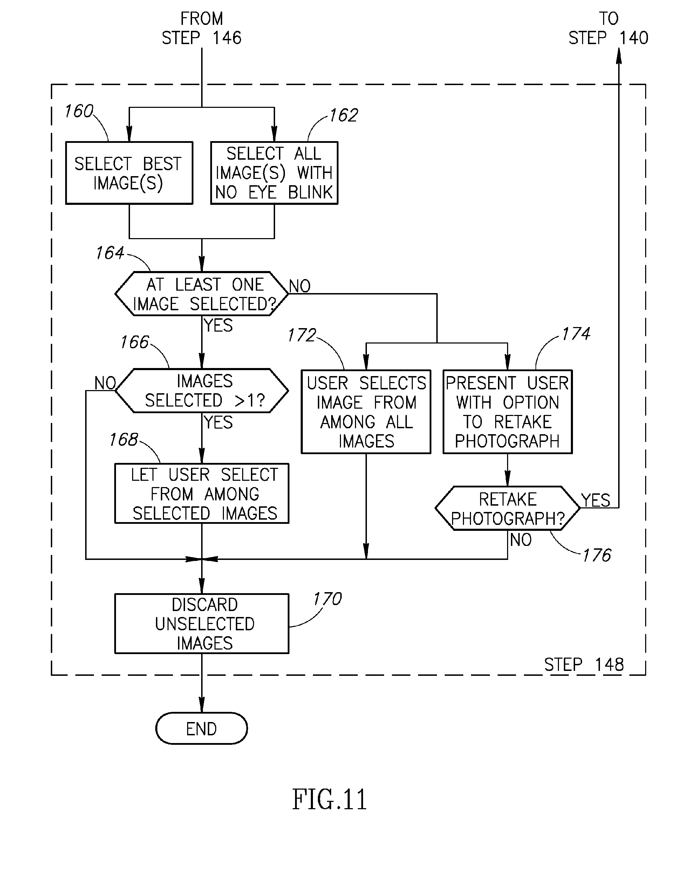

A flow diagram illustrating example possible actions based on closed eye detection results is shown in Figure 11. This flow shows the operation of step 148 of Figure 10 in more detail. There are several possible actions taken at this step, where the actual actions taken depend on user preferences and/or current device configuration. The actions shown in Figure 11 are provided as an illustrative example and are not intended to limit the scope of the mechanism.

Depending on the user preference or device configuration, the device either (1) selects the 'best' image(s) from the plurality of captured images (step 160) or (2) selects all image(s) that do not have any closed eyes (step 162). A best image may be image(s) that do not have any eye blink or, if all images have some eye blink, the images with minimum eye blink detected (e.g., only one eye closed, partly closed eyes, etc.).

If no images were selected during step 160 (no best images found) or 162 (no images without eye blink found), then either (1) the device gives the user the ability to select one or more images from among all images (step 172), or (2) the device presents the user with the option to re-take the photograph (step 174). If the user chooses to re-take the photograph (step 176), the method returns to step 140. In either case the unselected images are discarded (step 170).

If at least one image was selected during step 160 or 162 (step 164), then if only one image was selected (step 166), it is presented to the user and the remaining unselected images are discarded (step 170). If more than one image was selected during step 160 or 162 (step 164), then the device gives the user the ability of selecting one or more images from the group of selected images (step 168). Note that depending on the implementation, the device can allow the user to select a single image or multiple images from among the images selected by step 160 or 162.

A flow diagram illustrating a second example eye blink avoidance method is shown in Figure 12. In this alternative eye blink avoidance method, a first image is captured and eye blink detection is performed on the image. If one or more closed eyes are detected, the device captures a second image after some time delay. The premise here is that if a subject blinked in the first image, it is likely that they will not be blinking in the second image after waiting the time delay.

Initially, the user takes the photograph (i.e. snaps the shutter) (step 180). It is then checked whether this mode of the eye blink avoidance feature is enabled (step 182). If not, the device captures a single image and processes it as normal (step 194). If the feature is enabled (step 182), the device captures a single image (step 184) and then performs eye blink detection on the captured image (step 186). If eye blink (i.e. closed eyes) is not detected (step 188), the single captured image is presented to the user and normal processing continues.

If, however, one or more closed eyes are detected (step 188), the device waits a predetermined period of time *t2* (step 190) before capturing a second image (step 192). This second image is presented to the user and normal processing continues. Note that the period of time *t2* may be fixed by the device or configurable by the user. Typically it is less than 1 or 2 seconds. Note that if a subject blinked in the first captured image, there is a relatively high likelihood that the subject will not blink in the second delayed image.

In an alternative implementation, eye blink detection can be performed on the second captured image and, if detected, a third image can be captured. This process of capturing images and detecting eye blink can continue until a blink free image is captured or the user terminates the method.

### Eye Blink Detection

An example eye blink detection method suitable for use in the eye blink avoidance methods of Figures 10-12 will now be described in more detail. It is noted that eye blink detection algorithms are known in the art and the actual eye blink detection method used is not critical to the mechanism. An eye blink detection method may be performed entirely in the mobile communications device if the mobile communications device has sufficient processing power to perform the eye blink detection method, which may be computationally intensive. Alternatively, the eye blink detection method may be performed in a remote computer to which the mobile communications device transmits the images to be processed. Transmission of the images will be done using one of the mobile communications device's communication capabilities. The remote computer may be coupled to the Internet. The results of processing the images may be transmitted from the remote computer to the mobile communication device, possibly via the Internet. In a further alternative, the eye blink detection method may be performed partially in a remote computer as described above and partially in the mobile communications device.

In one implementation, the method detects the eyes in a manner similar to the well-known red-eye algorithm. It detects the faces of subjects first and then creates a complexity map of the facial image by detecting the difference in intensity of adjacent pixels where the two peaks of differing intensity indicate the location of the eyes, if the eyes are open. If the algorithm cannot detect a differing intensity within the facial location, it will conclude the eyes are closed.

As discussed supra, the user has the option to enable or disable the eye blink avoidance feature. The feature is extended to work with multiple human subjects in an image by performing the eye blink detection algorithm on each individual face in the image. Since the eye blink detection process occurs after the images have been captured, the algorithm is not subject to real-time constraints. This, however, does not guarantee that the eyes of each subject will be open since each subject in the photo can be blinking at different times. Thus, the mechanism implements a best-effort algorithm.

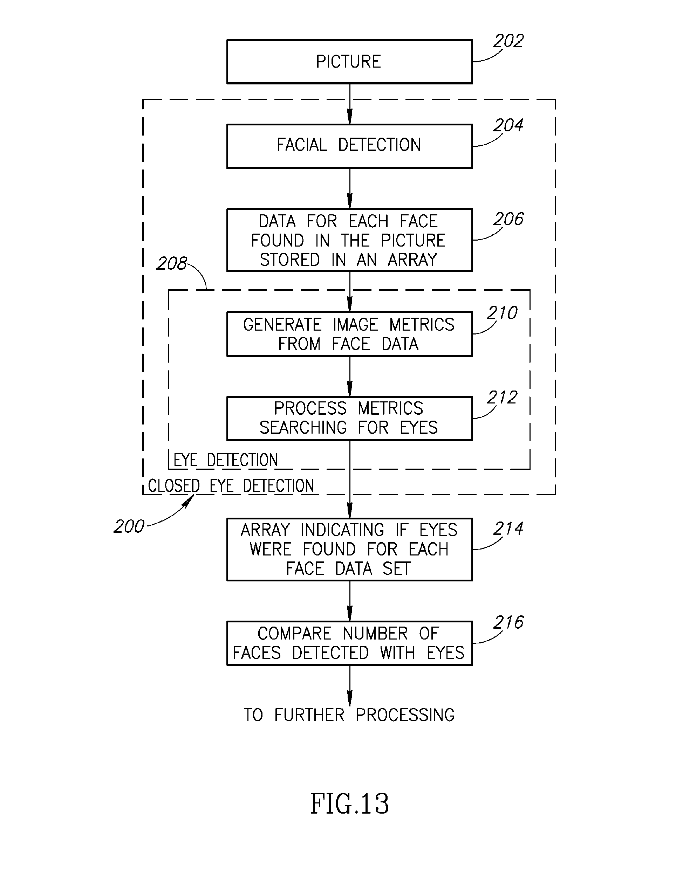

A process flow diagram illustrating the closed eye detection algorithm in more detail is shown in Figure 13. The closed eye detection algorithm, generally referenced 200, is performed for every photograph taken when the eye blink detection feature is enabled. The photograph image data 202 taken by the camera is input to the closed eye detection algorithm 200. A facial detection process 204 analyzes the photograph searching for faces using any suitable facial detection scheme known in the art. Data associated with each face found in the photograph is stored in an array 206. This array of facial data is input to the eye detection block 208 whereby image metrics are generated for each set of facial data (block 210). Example image metrics include, but are not limited to facial geometry, skin patterns, facial thermogram data, and intensity (i.e. how light or dark the pixel is) of each individual pixel, as well as differences of intensity between adjacent pixels.

The image metrics generated are processed by searching for eyes, using block 212. It is assumed that closed eyes are not considered or counted as eyes. The algorithm is operative to attempt to detect the iris of the eye by finding peaks in differences between the intensity of pixels. An opened eye (i.e. non-closed eye) is surrounded by a 'white' blob which is contrasted to the darker nature of the face and the pupil. The output of the closed eye detection algorithm is an array 214 where each element in the array represents a face. The content of each element in the array, in one example implementation, comprises a binary value that indicates whether a set of eyes were detected for that face. The algorithm then compares how many faces were detected versus the number of eyes detected via block 216. If the number of faces detected is greater than the number of pairs of eyes detected, then it is concluded that closed eyes exist in the photograph. In further processing, and depending on the particular implementation of the mechanism, the photograph with the most eyes detected compared to the number of faces detected is selected.

Note that processing shown in Figure 13 is for a single photograph. Depending on the particular implementation (hardware and software) of the mechanism, the algorithm may execute in parallel whereby multiple photographs are processed simultaneously. Thus, the closed eye detection module 208 is able to process multiple faces in parallel. The serial processing shown in Figure 13 is provided for illustration purposes only.

The terminology used herein is for the purpose of describing particular implementations only and is not intended to be limiting of the mechanism. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the mechanism has been presented for purposes of illustration and description, but is not intended to be exhaustive or limited to the mechanism in the form disclosed. As numerous modifications and changes will readily occur to those skilled in the art, it is intended that the mechanism not be limited to the limited number of implementations described herein. Accordingly, it will be appreciated that all suitable variations, modifications and equivalents may be resorted to, falling within the spirit and scope of the mechanism. The implementations were chosen and described in order to best explain the principles of the mechanism and the practical application, and to enable others of ordinary skill in the art to understand the mechanism for various implementations with various modifications as are suited to the particular use contemplated.

It is intended that the appended claims cover all such features and advantages of the mechanism that fall within the spirit and scope of the mechanism. As numerous modifications and changes will readily occur to those skilled in the art, it is intended that the mechanism not be limited to the limited number of implementations described herein. Accordingly, it will be appreciated that all suitable variations, modifications and equivalents may be resorted to, falling within the spirit and scope of the mechanism.

## Claims

1. A method of eye blink avoidance for use in a device having digital camera functionality, the method comprising:
capturing a plurality of images within a predetermined time period (142);
detecting eye blink in each image captured to determine those images having at least
one closed eye (146); and
performing one or more actions based on the results of the eye blink detection (148).

2. The method as claimed in claim 1, wherein the one or more actions comprises selecting a single best image (160) from the plurality of images and discarding all others (170).

3. The method as claimed in claim 1, wherein the one or more actions comprises:
selecting all images having no eye blink (162);
if there are multiple images with no eye blink, permitting a user to select one of the
images therefrom (168); and
discarding all unselected images (170).

4. The method as claimed in claim 1, further comprising offering a user an option to retake a photograph if eye blink is detected in all of the plurality of images (174).

5. The method as claimed in claim 1, wherein the one or more actions comprises selecting an optimum image from the plurality of images (160) based on the results of the eye blink detection and discarding all other images (170).

6. The method as claimed in claim 1, wherein the one or more actions comprises:
waiting a predetermined time period (190) if closed eyes are detected in a first image (186); and
capturing a second image after expiration of the time period (192).

7. The method according to claim 6, further comprising detecting eye blink in the second image and capturing a third image is closed eyes are detected therein.

8. The method according to claim 1, wherein the time period is configurable by a user.

9. The method as claimed in claim 1, wherein detecting eye blink in a captured image comprises:
performing face detection (204) on the captured image and generating a data array
representing face data in response thereto (206);
generating a plurality of image metrics from the data array (210);
searching the plurality of image metrics for existence of eyes (212);
if the number of faces detected exceeds the number of pairs of eyes detected,
concluding at least one closed eye exists in the captured image (216).

10. A mobile communications device (30), comprising:
a digital camera subsystem (56);
a cellular radio subsystem (34);
a memory (38);
a processor (36) coupled to the digital camera subsystem, the cellular radio subsystem
and the memory, the processor operative to perform eye blink avoidance, including
capturing a plurality of images within a predetermined time period;
detecting eye blink in each image captured to determine those images having at least
one closed eye; and
performing one or more actions based on the results of the eye blink detection.

11. The mobile communications device as claimed in claim 10, wherein the one or more actions comprises selecting an image with the least number of closed eyes.

12. The mobile communications device as claimed in claim 10, wherein the one or more actions comprises:
selecting all images having no eye blink;
if there are multiple images with no eye blink, permitting a user to select one of the
images therefrom; and
discarding all unselected images.

13. The mobile communications device as claimed in claim 10, wherein the one or more actions comprises selecting an optimum image from the plurality of images based on the results of the eye blink detection and discarding all other images.

14. The mobile communications device as claimed in claim 10, wherein detecting eye blink in a captured image comprises:
performing face detection on the captured image and generating a data array
representing face data in response thereto;
generating a plurality of image metrics from the data array;
searching the plurality of image metrics for existence of eyes;
if the number of faces detected exceeds the number of pairs of eyes detected,
concluding at least one closed eye exists in the captured image.

## Amended claims

### Amended claims in accordance with Rule 137(2) EPC.

**1.** A method of eye blink avoidance for use in a device having digital camera functionality, the method comprising:
capturing a plurality of images within a predetermined time period (142);
detecting eye blink in each image captured to determine those images having at least one closed eye (146); and
performing one or more actions in the device based on the results of the eye blink detection (148),
wherein detecting eye blink in a captured image comprises:
performing face detection (204) on the captured image and generating a data array representing face data in response thereto (206);
generating a plurality of image metrics from the data array (210);
searching the plurality of image metrics for existence of eyes (212); and
if the number of faces detected exceeds the number of pairs of eyes detected, concluding at least one closed eye exists in the captured image (216).

**2.** The method as claimed in claim 1, wherein the one or more actions comprises selecting a single best image (160) with the least number of closed eyes from the plurality of images and discarding all others (170).

**3.** The method as claimed in claim 1, further comprising offering a user an option to retake a photograph if eye blink is detected in all of the plurality of images (174).

**4.** The method according to claim 1, wherein the predetermined time period is configurable by a user.

**5.** A mobile communications device (30), comprising:
a digital camera subsystem (56);
a cellular radio subsystem (34);
a memory (38);
a processor (36) coupled to the digital camera subsystem, the cellular radio subsystem and the memory, the processor operative to perform eye blink avoidance, including
capturing a plurality of images within a predetermined time period; detecting eye blink in each image captured to determine those images having at least one closed eye; and
performing one or more actions in the mobile communications device based on the results of the eye blink detection,
wherein detecting eye blink in a captured image comprises:
performing face detection on the captured image and generating a data array representing face data in response thereto;
generating a plurality of image metrics from the data array;
searching the plurality of image metrics for existence of eyes; and
if the number of faces detected exceeds the number of pairs of eyes detected, concluding at least one closed eye exists in the captured image.

**6.** The mobile communications device as claimed in claim 5, wherein the one or more actions comprises selecting an image with the least number of closed eyes.
